# EUROPÄISCHE PATENTSCHRIFT

(11) **EP 3 222 259 B1**
(45) Veröffentlichungstag und Bekanntmachung des Hinweises auf die Patenterteilung: **15.05.2019**
(21) Anmeldenummer: 17000805.6
(22) Anmeldetag: 12.10.2016
(51) Int. Cl.: A61G 3/06, B60P 1/43

(54) **VORRICHTUNG ZUM ERLEICHTERN DES EIN- UND AUSSTIEGS VON INSBESONDERE ROLLSTUHLFAHRERN IN EIN BZW. AUS EINEM FAHRZEUG**
DEVICE FOR FACILITATING ENTRY AND EXIT TO AND FROM A VEHICLE, ESPECIALLY FOR WHEELCHAIR USERS
DISPOSITIF DESTINÉ À FACILITER LA MONTÉE ET LA DESCENTE EN PARTICULIER DE CONDUCTEURS EN FAUTEUIL ROULANT D'UN VÉHICULE AUTOMOBILE

(30) Priorität: 14.10.2015 DE 102015013235
(43) Veröffentlichungstag der Anmeldung: 27.09.2017
(62) Teilanmeldung aus: 16002192.9
(73) Patentinhaber: Palfinger Tail Lifts GmbH, 27777 Ganderkesee (DE)
(72) Erfinder: Altmann, Serge, 27753 Delmenhorst (DE); Wiels, Bernhard, 26135 Oldenburg (DE)
(74) Vertreter: Möller, Friedrich

(56) Entgegenhaltungen:
- EP-A2- 1 787 612
- WO-A1-98/06370
- WO-A1-2004/085222
- DE-A1- 10 043 561

## Beschreibung

Die Erfindung betrifft eine als Ein- und Ausstiegshilfe für insbesondere Rollstuhlfahrer dienende Vorrichtung gemäß dem Oberbegriff des Anspruchs 1.

Vorrichtungen der hier angesprochen Art kommen zum Einsatz, um mobilitätsbehinderten Personen die Benutzung von freien öffentlichen Verkehrsmitteln wie Zügen, Bussen, Straßenbahnen oder dergleichen zu ermöglichen bzw. zu erleichtern. Dazu ist im Türbereich des Fahrzeugs eine ein- und ausfahrbare Rampe angeordnet. In einer Nichtgebrauchsstellung ist die Rampe in ein Gehäuse unter einer Flurfläche im Bereich der Tür des Fahrzeugs eingefahren. In einer Gebrauchsstellung ist die Rampe aus dem Gehäuse herausgefahren und gegebenenfalls verschwenkt zur Bildung einer geneigten Fläche, die einen Höhenunterschied zwischen der Flurfläche des Fahrzeugs und einem angrenzenden Bahnsteig, Gehweg oder einem sonstigen Untergrund überbrückt.

Aus der DE 100 43 561 A1 und der DE 100 65 989 A1 sind ein- und ausfahrbare Rampen für Türeinstiege bekannt. Auf den Rampenplattformen sind Trittsensoren angeordnet. Außerdem sind die vorderen Querkanten der Rampenplattformen mit Stoßsensoren versehen. Falls auf einen flächigen Trittsensor Druck ausgeübt wird, schaltet der Trittsensor den Antrieb der Rampenplattform aus. Ebenso wird der Antrieb der Rampenplattform abgeschaltet, wenn beim Ausfahren derselben der Stoßsensor gegen ein Hindernis stößt. Diese Art der Absicherung ist aufwändig, weil sie getrennte Sensorsysteme erfordert.

Aus der WO 98/06370 A1 ist eine ein- und ausfahrbare Rampe für Türeinstiege bekannt, die an ihrem vorderen Querrand ein hohles Gummiprofil aufweist. Ein Hohlraum im Gummiprofil ist über einen Schlauch mit einem Sensor verbunden. Wenn der vordere Querrand der Rampe gegen ein Hindernis stößt, wird das Gummiprofil zusammengedrückt. Dadurch steigt der Druck im Hohlraum. Dieser erhöhte Druck wird durch den Schlauch an den Sensor weitergeleitet, der dann das weitere Ausfahren der Rampe stoppt. Wenn der Schlauch abgeknickt oder undicht wird, findet bei dieser bekannten Rampe kein Stoppen der Ausfahrbewegung mehr statt, wenn die Rampe mit dem Gummiprofil gegen ein Hindernis fährt.

Aus der EP 1 787 612 A2 ist eine Vorrichtung zum Erleichtern des Ein- und Ausstiegs in ein Fahrzeug bzw. aus einem Fahrzeug bekannt. Diese Vorrichtung verfügt über einen Rahmen, in dem eine als Rampe dienende Trittplatte verschiebbar ist, wobei der Rahmen mit Dehnungsmessstreifen versehen ist. Die Dehnungsmessstreifen befinden sich dadurch nicht an der beweglichen Trittplatte, sondern an diese führenden festen Teilen der Vorrichtung. Das erleichtert zwar eine Verkabelung der Dehnungsmessstreifen, jedoch können diese auf die Trittplatte einwirkenden Störkräfte nur indirekt ermitteln und das auch nur, soweit sich die Störkräfte auf die mit den Dehnungsmessstreifen versehenen feststehenden Rahmen der Führung der Trittplatte auswirken.

Hiervon ausgehend liegt der Erfindung die Aufgabe zugrunde, eine Vorrichtung zur Erleichterung des Ein- und Ausstiegs von insbesondere Rollstuhlfahrern in ein bzw. aus einem Fahrzeug zu schaffen, die mit einfachen Mitteln einen zuverlässigen und gefahrlosen Ein- und Ausstieg ermöglicht.

Eine Vorrichtung zur Lösung der eingangs genannten Aufgabe weist die Merkmale des Anspruchs 1 auf. Demnach ist es vorgesehen, unter der Rampe mindestens eine in Ein- und Ausfahrrichtung der Rampe verlaufende elastisch verformbare und/oder federnde Einhausung für wenigstens ein unter der Rampe vorgesehenes Sensormittel anzuordnen. Die elastisch verformbare bzw. federnde Einhausung schützt das Sensormittel vor ungewollter Betätigung und auch gegen Beschädigungen. Erst wenn die Rampe derart belastet wird, dass unter der Belastung der Rampe sich die Einhausung verformt, wird beim Überschreiten einer gewissen Anfangsverformung der Einhausung das Sensormittel betätigt zum Stoppen der Ein- oder Ausfahrbewegung der Rampe und/oder zum Detektieren einer während der Benutzung der Rampe auf diese Ecke ausgeübte Last. Die oder jede elastisch verformbare, federnd ausgebildete Einhausung weist eine in Richtung zur fahrzeugseitigen Querkante der Rampe zunehmende Federsteifigkeit auf. Dieses beruht auf der Erkenntnis, dass die mindestens eine federnde Einhausung sich mit einer umso größeren Kraft auf der unteren Querkante der Öffnung des Gehäuses abstützt, umso weiter die Rampe aus dem Gehäuse herausgefahren ist bzw. aus dem Gehäuse herausragt. Je dichter sich die fahrzeugseitige Querkante der Rampe an der unteren äußeren Querkante an der Öffnung des Gehäuses befindet, um so größer kann die Abstützkraft der Rampe an der vorderen Querkante des Gehäuses sein. Diese sich mit dem Aus- und Einfahrweg der Rampe relativ zum Gehäuse ändernde Auflagekraft wird ausgeglichen durch die sich in Längsrichtung der Rampe ändernde Federsteifigkeit der mindestens einen Einhausung, die umso größer sein muss, je weiter die Rampe gegenüber dem Gehäuse nach außen vorsteht.

Es ist vorgesehen, dass die oder jede Einhausung das Sensormittel umgibt. Die Einhausung schützt dadurch das Sensormittel und sorgt gleichzeitig dafür, dass das Sensormittel erst betätigt wird, wenn eine vorbestimmte Last auf die Einhausung und die Rampe einwirkt.

Die Ausgestaltung der Einhausung sieht es vor, dass diese im Querschnitt trapez- oder kuppelartig, insbesondere tellerartig, ausgebildet ist zur Bildung eines Aufnahme- oder Hohlraums für das Sensormittel, der sich zwischen der Innenseite der Einhausung und dem von dieser abgedeckten und beabstandeten Bereich der Unterseite der Rampe befindet. Im Aufnahmeraum ist das mindestens eine Sensormittel geschützt untergebracht. Außerdem erfolgt eine Betätigung des Sensormittels erst dann, wenn die Einhausung aufgrund einer bestimmten Belastung der Rampe sich in einem ausreichenden, definierten Maße elastisch verformt hat und/oder eingefedert ist.

Gemäß einer besonders vorteilhaften Ausführungsform der Erfindung sind die jeweilige Einhausung und/oder das jeweilige Sensormittel streifenartig ausgebildet. Die Längsrichtung der Einhausungen und/oder Sensormittel verlaufen dabei bevorzugt parallel zu den in Einschub- und Ausschubrichtung verlaufenden Längsrändern der Rampe. Dadurch liegt über dem gesamten Ein- und Ausfahrweg eine Stelle der oder jeder Einhausung auf einer eine Ausschuböffnung begrenzenden unteren Querkante des Gehäuses der Vorrichtung an. Dieser Querkante können unter der oder jeder länglichen Einhausung sich abwälzende Wälzkörper angeordnet sein. Wenn aufgrund einer Belastung der Rampe die Wälzkörper eine so große Kraft auf die Anlagestelle der jeweiligen Einhausung ausüben, dass diese soweit einfedert, um sie die Sensorleiste eindrücken oder sonst wie betätigen zu können, erzeugt die jeweilige Sensorleiste ein Signal, das das weitere Ein- oder Ausfahren der Rampe stoppt oder in der Gebrauchsumstellung der Rampe eine Last auf derselben detektiert.

Eine bevorzugte Möglichkeit der Änderung der Federsteifigkeit der jeweiligen Einhausung in Längsrichtung derselben besteht darin, die jeweilige Einhausung kappenartig auszubilden. Das kann geschehen, indem gegenüberliegende äußere Randstreifen oder Randbereiche der profilierten Einhausungen mit einer Reihe beabstandeter Einschnitte bzw. Nuten versehen sind. Solche Einschnitte sind in beiden gegenüberliegenden Randstreifen jeder Einhausung vorgesehen, und zwar so, dass sie von den äußeren Längsrändern der Einhausung ausgehen und somit beide gegenüberliegenden Längsränder jeder Einhausung im Bereich jedes Einschnitts unterbrochen sind. Dadurch bleiben zwischen benachbarten Einschnitten oder Nuten zungenartige Vorsprünge an vorzugsweise beiden gegenüberliegenden Randbereichen der Einhausung stehen. Durch Bildung der Einhausung aus einem vorzugsweise dünnen Blech aus zum Beispiel Federstahl oder einer dünnen Platte erhalten alle Zungen der jeweiligen Einhausung elastisch verformbare und/ oder federnde, insbesondere rückfedernde, Eigenschaften.

Eine vorteilhafte weitere Möglichkeit der jeweiligen Einhausung sieht es vor, die Tiefe der Einschnitte in den Randstreifen zur fahrzeugseitigen Querkante der Rampe abnehmen zu lassen, vorzugsweise kontinuierlich. Alternativ oder zusätzlich kann es auch vorgesehen sein, die Breite der Einschnitte zu verändern, so dass die zwischen denselben gebildeten Zungen sich ändernde Breiten und damit sich ändernde Federsteifigkeiten aufweisen, vorzugsweise zur fahrzeugseitigen Querkante der Rampe steifer werden. Es ist auch denkbar, alternativ oder zusätzlich die Breite der Einhausung in Richtung zur fahrzeugseitigen Querkante zu verringern, wodurch die Zungen zwischen benachbarten Einschnitten kürzer werden und auch dadurch eine größere Federsteifigkeit erhalten.

Eine andere Ausgestaltungsmöglichkeit der Vorrichtung sieht es vor, dass das von der jeweiligen Einhausung umgebende Sensormittel unter der Rampe als mindestens eine Schaltleiste, vorzugsweise eine drucksensitive elektrische Schaltleiste, ausgebildet ist. Solche handelsüblichen Schaltleisten lassen sich besonders vorteilhaft mit den erfindungsgemäß elastisch bzw. federnd ausgebildeten Einhausungen, die bevorzugt von federnden Stützstreifen gebildet sind, kombinieren, um der jeweiligen Schaltleiste eine zuverlässige und auf die Last, die auf die Rampe ausgeübt wird, abgestimmte Schaltcharakteristik zu verleihen.

Bevorzugte Ausführungsbeispiele der Erfindung werden nachfolgend anhand der Zeichnung näher erläutert. In dieser zeigen:
- Fig. 1: einen Längsschnitt durch die Vorrichtung in einer Nichtgebrauchsstellung,
- Fig. 2: einen Längsschnitt durch die Vorrichtung der Fig. 1 in einer Gebrauchsstellung,

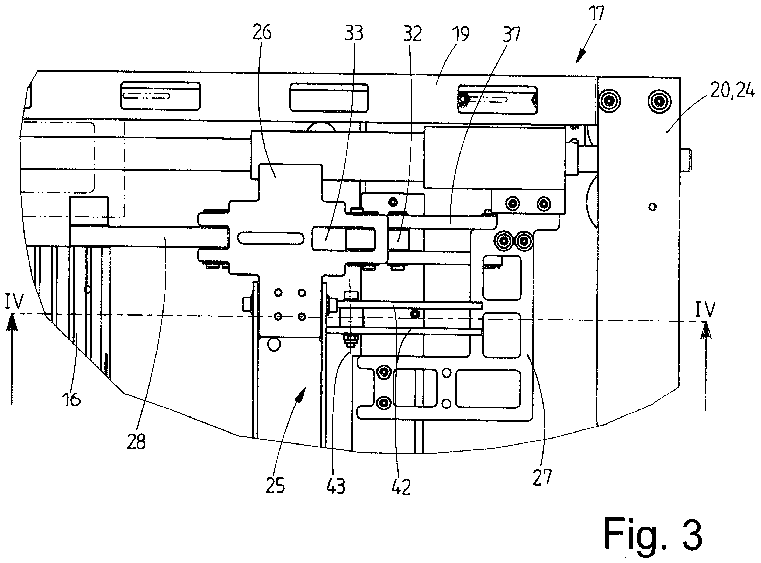

- Fig. 3: eine Draufsicht auf einen Hebeltrieb der Vorrichtung in ihrer Nichtgebrauchsstellung,
- Fig. 4: einen Längsschnitt IV-IV durch den Hebeltrieb der Fig. 3,

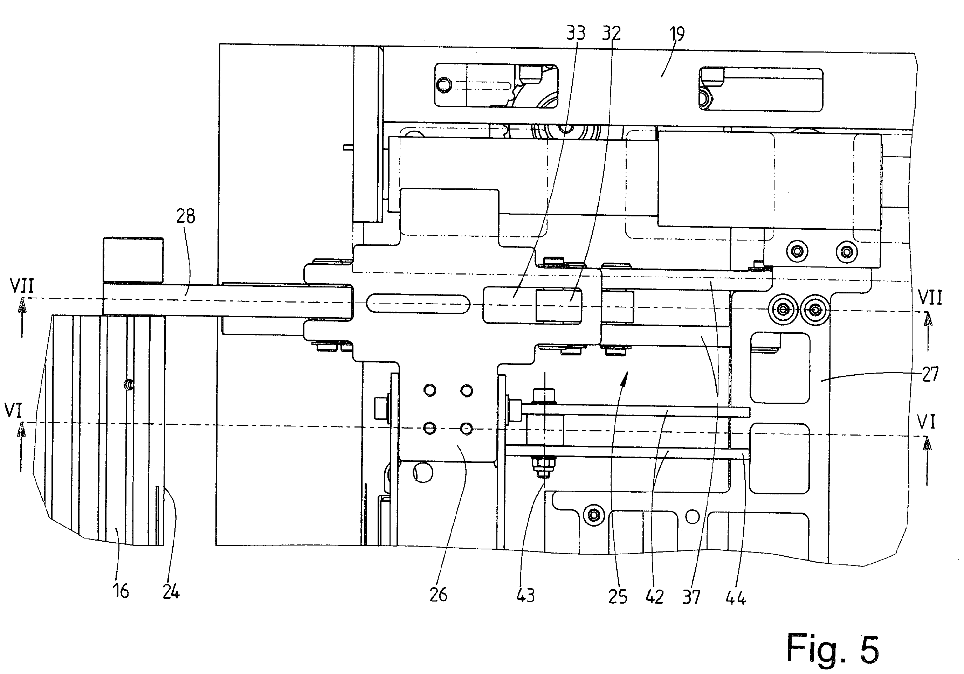

- Fig. 5: eine Draufsicht auf den Hebeltrieb der Fig. 3 kurz vor der Gebrauchsstellung der Vorrichtung,
- Fig. 6: einen Längsschnitt VI-VI durch den in der Fig. 5 dargestellten Hebeltrieb,

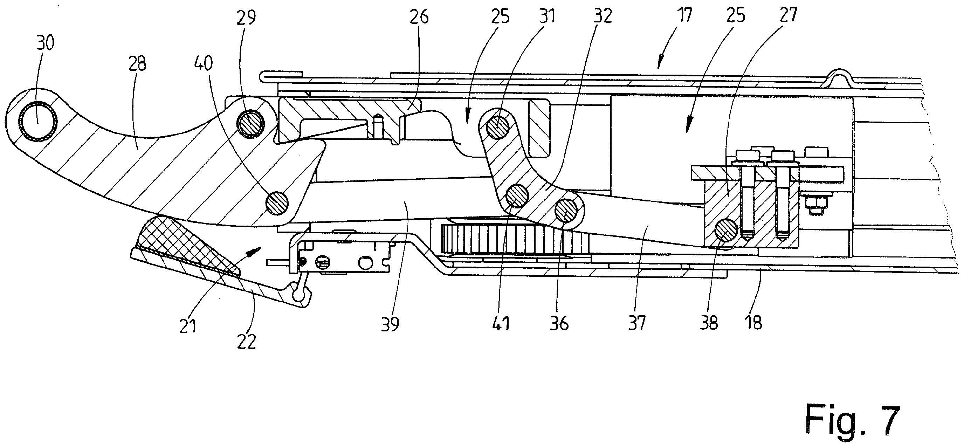

- Fig. 7: einen Längsschnitt VII-VII durch den in der Fig. 5 dargestellten Hebeltrieb,

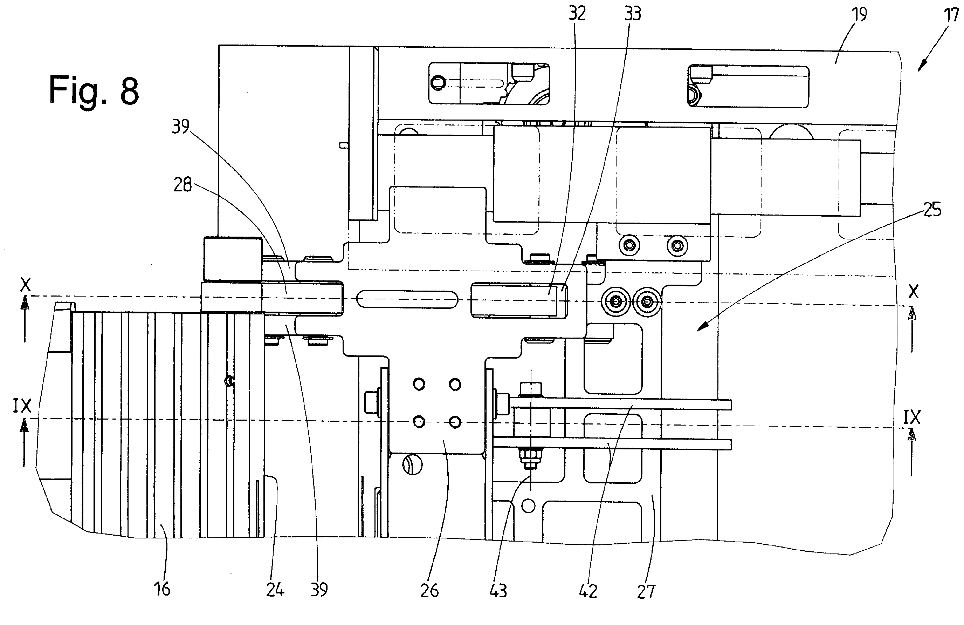

- Fig. 8: eine Draufsicht auf den Hebeltrieb in der Gebrauchsstellung der Vorrichtung,
- Fig. 9: einen Längsschnitt IX-IX durch den Hebeltrieb der Fig. 8,
- Fig. 10: einen Längsschnitt X-X durch den Hebeltrieb der Fig. 8,
- Fig. 11: eine Unteransicht der Rampe der Vorrichtung der Fig. 1 und 2,
- Fig. 12: einen vergrößerten teilweisen Längsschnitt XII-XII durch die Rampe der Fig. 1, und
- Fig. 13: einen vergrößert dargestellten teilweisen Querschnitt XIII-XIII durch einen Eckbereich der Rampe der Fig. 11.

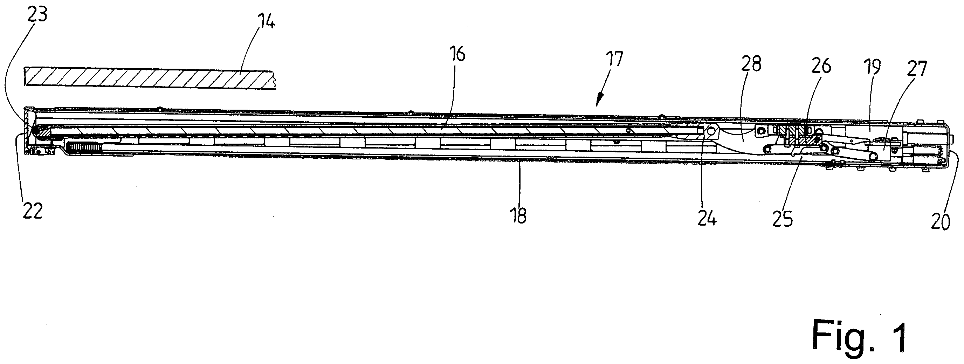

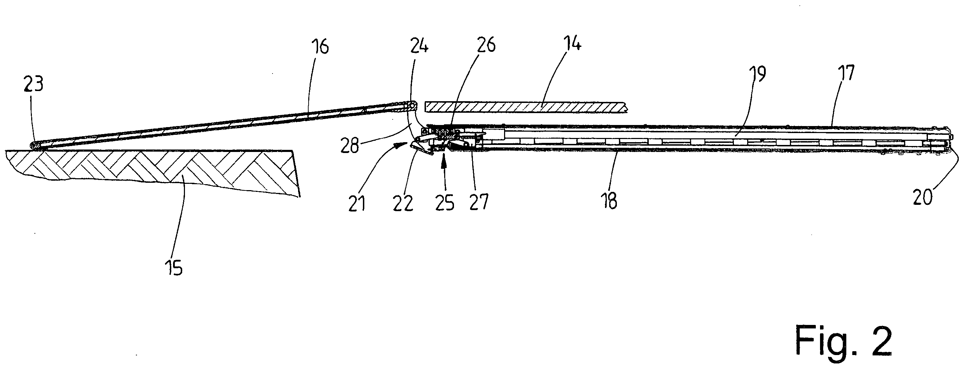

Die in den Figuren gezeigte Vorrichtung dient zur Erleichterung des Einstiegs und Ausstiegs von mobilitätsbehinderten Personen, beispielsweise Rollstuhlfahrer, in ein Fahrzeug bzw. aus einem Fahrzeug. Beim Fahrzeug handelt es sich insbesondere um ein öffentliches Verkehrsmittel, beispielsweise einen Bus, einen Zug, eine Straßenbahn oder dergleichen. Die Vorrichtung dient dabei zur Überwindung eines Höhenunterschieds zwischen einer nur in den Fig. 1 und 2 andeutungsweise dargestellten Flurfläche 14 des Fahrzeugs und einem nur in der Fig. 2 andeutungsweise dargestellten Bodenbelag 15, wie zum Beispiel einem Gehweg oder einem Bahnsteig einer Haltestelle des Fahrzeugs.

Die Vorrichtung verfügt über eine rechteckige ebene Rampe 16, die aus einem fest mit dem Fahrzeug verbunden Gehäuse 17 in eine Gebrauchsstellung (Fig. 2) ausfahrbar bzw. in einen Nichtgebrauchsstellung (Fig. 1) einfahrbar ist. Das kastenförmige Gehäuse 17 ist im Türbereich des Fahrzeugs unter der Flurfläche 14 desselben befestigt. Dabei kann sich das Gehäuse 17 mit einer Deckwandung unter der Flurfläche 14 befinden, wie es in der Fig. 1 dargestellt ist. Es ist aber auch denkbar, dass die Flurfläche 14 die Deckwandung des Gehäuses 17 bildet. Mit parallelem Abstand unter der Flurfläche 14 befindet sich eine ebene Bodenwandung 18 des Gehäuses 17. Zwischen der Deckwandung und der Bodenwandung 18 des Gehäuses 17 befinden sich parallele, aufrechte Längsseitenwandungen 19 und eine Rückwandung 20 des Gehäuses 17. Eine Vorderseite des Gehäuses 17 verfügt über eine vollflächige Öffnung 21. Diese Öffnung 21 ist durch eine schwenkbare Klappe 22 in der Nichtgebrauchsstellung der Vorrichtung verschließbar (Fig. 1). Dabei liegt eine in der Gebrauchsstellung auf dem Bodenbelag 15 des Bahnsteigs oder dergleichen aufliegende vordere freie Querkante 23 der Rampe 16 verdeckt hinter der geschlossenen Klappe 22 im Gehäuse 17.

Einer der vorderen Querkante 23 gegenüberliegende, fahrzeugseitigen Querkante 24 der Rampe 16 sind im gezeigten Ausführungsbeispiel zwei parallele, randseitig angeordnete gleiche Hebeltriebe 25 zugeordnet. Die Hebeltriebe 25 werden zum Ausfahren der Rampe 16 in die Gebrauchsstellung und zum Einfahren in die Nichtgebrauchsstellung gleichermaßen und synchron parallel zur Längsmittelachse der Rampe 16 im Gehäuse 17 verfahren. Dazu kann jedem Hebeltrieb 25 ein eigener Antrieb zugeordnet sein oder es werden beide Hebeltriebe 25 von einem gemeinsamen Antrieb synchron verfahren.

In erfindungsgemäß besonderer Weise sind die Hebeltriebe 25 ausgebildet. Im Folgenden werden der Aufbau und die Funktion eines der gleichen Hebeltriebe 25 näher erläutert:
Jeder Hebeltrieb 25 verfügt über einen Schlitten 26 und einen Schieber 27. Der Schieber 27 ist mit einem geeigneten Antrieb zum linearen Verfahren des Hebeltriebs 25 in Längsrichtung im Gehäuse 17 versehen bzw. mit mindestens einem Antrieb verbunden oder hieran angekuppelt. Von so axial verfahrbaren Schiebern 27 wird der Schlitten 26 im Gehäuse 17 mitbewegt. Im gezeigten Ausführungsbeispiel schiebt der Schieber 27 den Schlitten 26 beim Ausfahren der Rampe 16 aus dem Gehäuse 17 vor sich her. Beim Einfahren der Rampe 16 zieht der Schieber 27 den Schlitten 26 hinter sich her.

Am zur Öffnung 21 des Gehäuses 17 weisenden Ende ist dem Schlitten 26 jedes Hebeltriebs 25 ein Aufrichthebel 28 zugeordnet. Ein zum Schlitten 26 weisendes Ende des Aufrichthebels 28 ist um eine horizontale Achse 29 schwenkbar am Schlitten 26 gelagert. Ein gegenüberliegendes Ende des Aufrichthebels 28 ist gelenkig mit einem außenliegenden Randbereich der fahrzeugseitigen Querkante 24 der Rampe 16 verbunden, und zwar auch durch eine horizontale Achse 30, die parallel zur Querkante 24 der Rampe 16 verläuft. Durch ein Verschwenken des Aufrichthebels 28 jedes Hebeltriebs 25 ist eine Flurkantenanpassung der Rampe 16 herbeiführbar, wodurch die fahrzeugseitige Querkante 24 der Rampe 16, die in der Nichtgebrauchsstellung im Gehäuse 17 unter der Flurfläche 14 liegt, hochgeschwenkt wird auf das Niveau der Flurfläche 14 (Fig. 2).

Eine weitere Besonderheit der Erfindung besteht darin, dass zum Hochschwenken des jeweiligen Aufrichthebels 28 in die Gebrauchsstellung der Vorrichtung der Abstand des Schiebers 27 zum Schlitten 26 veränderbar ist. Dazu ist der jeweilige Hebeltrieb 25 so ausgebildet, um durch Verringerung des Abstands des Schiebers 27 zum Schlitten 26 den jeweiligen Aufrichthebel 28 in die Gebrauchsstellung der Rampe 16 hochzuschwenken. Die dabei erfolgende Relativbewegung des Schiebers 27 zum Schlitten 26 wird mechanisch umgesetzt in die Schwenkbewegung zum Hochschwenken des Aufrichthebels 28 um die horizontale, parallel zur Querkante 24 der Rampe 16 verlaufende Achse 29, an der der Aufrichthebel 28 in einer vertikalen Ebene verschwenkbar am Schlitten 26 gelagert ist. Das damit einhergehende Hochschwenken des an der Rampe 16 um die parallel zur Achse 29 verlaufende Achse 30 drehbart gelagerten freien Endes des jeweiligen Aufrichthebels 28 dient zur Herbeiführung der Flurkantenanpassung. In umgekehrter Weise erfolgt das Zurückschwenken des jeweiligen Aufrichthebels 28 vor dem Einfahren der Rampe 16 in das Gehäuse 17. Es vergrößert sich zunächst nur der Abstand des Schiebers 27 zum Schlitten 26, wobei es zum Zurückschwenken des jeweiligen Aufrichthebels 28 und Rückgängigmachung der Flurkantenanpassung kommt. Nachdem der jeweilige Aufrichthebel 28 zurückgeschwenkt ist in eine Stellung, die der Nichtgebrauchsstellung entspricht, wird vom weiterhin in Richtung zur Rückwandung 20 des Gehäuses 17 verfahrenen Schieber 27 der Schlitten 26 mitgenommen, ohne dabei seinen Abstand zum Schieber 27 nennenswert zu verändern.

Die Mitnahme des Schlittens 26 vom Schieber 27 erfolgt durch eine mechanische Verbindung derselben. Dazu ist an jedem Schlitten 26 ein um eine horizontale, parallel zur Achse 29 verlaufende Achse 31 schwenkbarer Kipphebel 32 gelagert. Der Kipphebel 32 ist in einer für ihn vorgesehenen Ausnehmung 33 im Schlitten 26 frei schwenkbar gelagert. Beim Kipphebel 32 handelt es sich um einen doppelarmigen Hebel, dessen Arme abgewinkelt sind, und zwar im gezeigten Ausführungsbeispiel um etwa 90° bis 145°. Am Ende eines oberen Hebelarms des Kipphebels 32 befindet sich die Achse 31, womit der Kipphebel 32 am Schlitten 26 in der gleichen vertikalen Ebene des Aufrichthebels 28 verschwenkbar ist. Ein freies Ende des unteren, seitlich abstehenden Hebelarms des Kipphebels 32 ist mit einem parallel zur Achse 31 verlaufenden Gelenkbolzen 36 gelenkig mit je einem Ende zweier paralleler laschenartiger Betätigungsarme 37 verbunden.

Die dem Kipphebel 32 gegenüberliegenden Enden der Betätigungsarme 37 sind mit einem weiteren Gelenkbolzen 38, der parallel zum Gelenkbolzen 36 verläuft, gelenkig mit dem Schieber 27 verbunden.

Jeder Kipphebel 32 ist mit einem Aufrichthebel 28 im gezeigten Ausführungsbeispiel mittels eines Paares gleicher Koppelarme 39 verbunden. Die Koppelarme 39 sind gegenüberliegenden Seiten des Aufrichthebels 28 und des Kipphebels 32 zugeordnet. Zum Aufrichthebel 28 weisenden Enden der Koppelarme 39 sind durch einen parallel zum Gelenkbolzen 36 verlaufenden Gelenkbolzen 40 mit dem Aufrichthebel 28 verbunden. Gegenüberliegende Enden der Koppelarme 39 sind mit einem parallel zum Gelenkbolzen 40 verlaufenden Gelenkbolzen 41 verbunden, der quer durch eine Stelle des Kipphebels 32 verläuft, in der sich seine beiden Hebelarme entweder mittig oder leicht außermittig treffen. Der Kipphebel 32 ist genauso breit ausgebildet wie der Aufrichthebel 28. Es liegen auch beide in einer gemeinsamen vertikalen Ebene parallel zur Längsmittelachse der Rampe 16. Dadurch können die Koppelarme 39 und auch die Betätigungsarme 37 parallel verlaufend gegenüberliegenden Seiten jedes Kipphebels 32 zugeordnet sein.

Von den zuvor beschriebenen Kopplungen des Aufrichthebels 28, des Schlittens 26 und des Schiebers 27 mittels der Koppelarme 39, der Betätigungsarme 37 und der Kipphebel 32 ist kurz vor oder nach dem vollständigen Ausfahren der Rampe 16 aus dem Gehäuse 17 durch Hochschwenken der Aufrichthebel 28 von den Hebeltrieben 25 die Flurkantenanpassung durch Anheben der fahrzeugseitigen Querkante 24 der Rampe 26 auf das Niveau der Flurfläche 14 im Türbereich des Fahrzeugs herbeiführbar. Wenn nach dem Ausfahren der Rampe 16 aus dem Gehäuse 17 oder kurz davor der Schieber 27 relativ am Schlitten 26 vorgefahren und dabei der Abstand des Schlittens 26 zum Schieber 37 verkürzt wird, werden von den Betätigungsarmen 37 jedes Hebeltriebs 25 die drehbar am jeweiligen Schlitten 26 gelagerten Kipphebel 32 im Uhrzeigersinn um ihre Achse 31 verschwenkt. Dabei werden die Koppelarme 39 relativ zum Schlitten 26 nach vorn bewegt und dadurch von den Koppelarmen 39 die Aufrichthebel 28 im Uhrzeigersinn um die Achse 29 am Schlitten 26 verschwenkt, so dass die Achsen 30, womit die Aufrichthebel 28 gelenkig an der fahrzeugseitigen Querkante 24 der Rampe 16 gelagert sind, zur Herbeiführung der Flurkantenanpassung angehoben werden. Umgekehrt erfolgt die Rückgängigmachung der Flurkantenanpassung zu Beginn des Einfahrens der Rampe 16 in das Gehäuse 17.

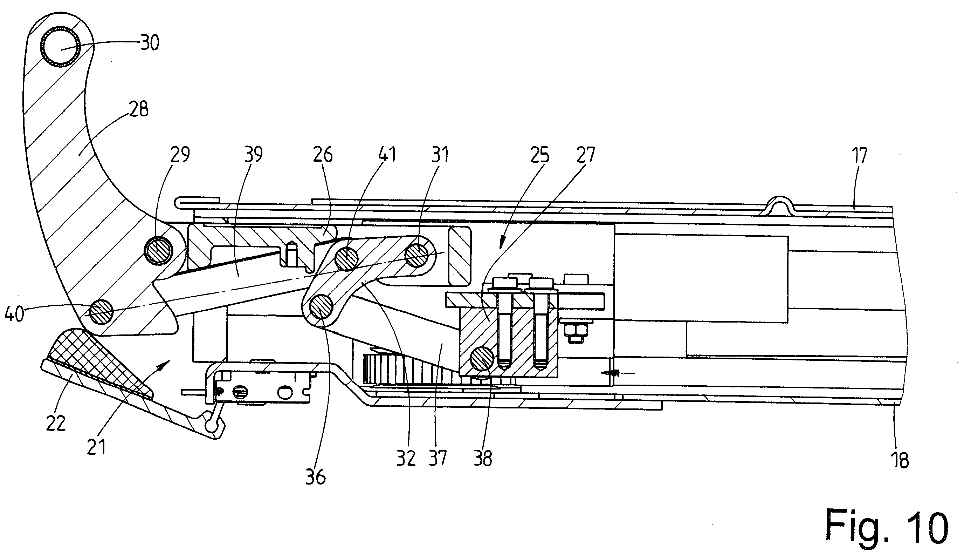

Die Achse 31 und der dazu parallele Gelenkbolzen 41 jedes Kipphebels 32 sind derart positioniert und der jeweilige Kipphebel 32 entsprechend ausgebildet sowie bemessen, dass in der Gebrauchsstellung der Rampe 16 bei hochgeschwenkten Aufrichthebeln 28 der jeweilige mittige Gelenkbolzen 41 jedes Kipphebels 32 oberhalb einer gedachten Linie durch die Achsen 31 liegt (Fig. 10). Dadurch kommt eine sogenannte Übertotpunktstellung des Kipphebels 32 jedes Hebeltriebs 25 zustande, die nach erfolgter Flurkantenanpassung die hochgeschwenkten Kipphebel 32 mit der fahrzeugseitigen Querkante 24 der Rampe 16 formschlüssig arretiert.

Die Steuerung der Relativbewegung zwischen dem Schlitten 26 und dem Schieber 27 jedes Hebeltriebs 25 erfolgt im gezeigten Ausführungsbeispiel durch zwei gleich ausgebildete, parallele Klinken 42 jedes Hebeltriebs 25. Die Klinken 42 sind so ausgebildet, dass sie beim Herausfahren der Rampe 16 aus dem Gehäuse 17 den Abstand des Schiebers 27 zum Schlitten 26 konstant halten. Dabei wird die Rampe 16 größtenteils aus dem Gehäuse 17 herausgeschoben. Anschließend werden die Klinken 42 derart betätigt, dass sie den Abstand des Schlittens 26 zum Schieber 27 nicht mehr konstant halten.

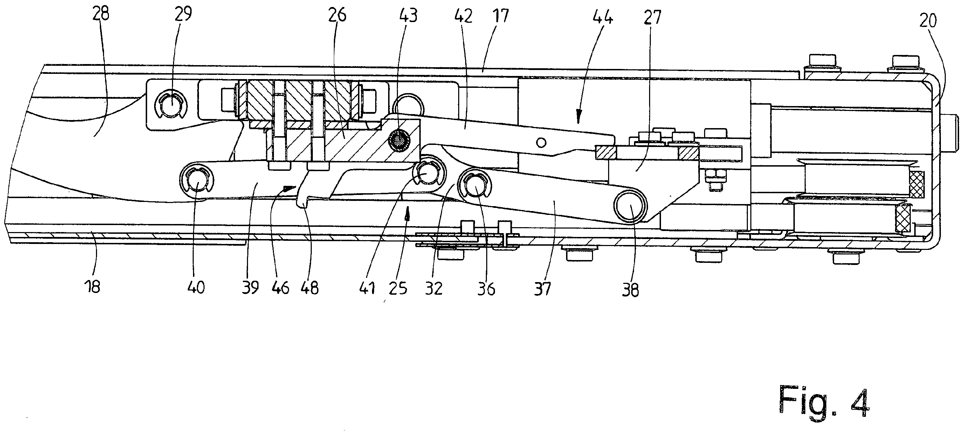

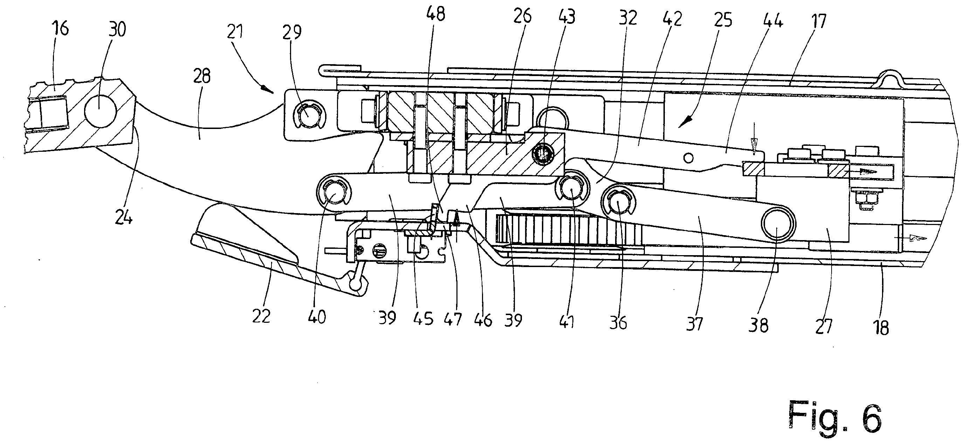

Die Klinken 42 sind als doppelarmige Hebel ausgebildet. Dort, wo die beiden Hebelarme der Klinken 42 sich treffen, ist jede Klinke 42 mit einer parallel zu den übrigen Achsen, beispielsweise der Achse 30, verlaufenden Achse 43 am Schlitten 26 in einer vertikalen Längsmittelebene verschwenkbar gelagert. Ein zum Schieber 27 weisender Endbereich 44 jeder Klinke 42 kann sich in der in den Fig. 4 und 6 gezeigten Schwenkposition der jeweiligen Klinke 42 am Schieber 27 abstützen, so dass keine Relativbewegung zwischen dem Schlitten 26 und dem Schieber 27 möglich ist. Nach oder kurz vor dem Ausfahren der Rampe 16 aus dem Gehäuse 17 werden die Klinken 42 gegen den Uhrzeigersinn um die Achsen 43 etwas verschwenkt, so dass der dem Schieber 27 zugeordnete Endbereich 44 jeder Klinke 42 vom Schieber 27 freikommt. Dadurch wird eine Relativbewegung zwischen dem Schlitten 26 und dem Schieber 27 möglich.

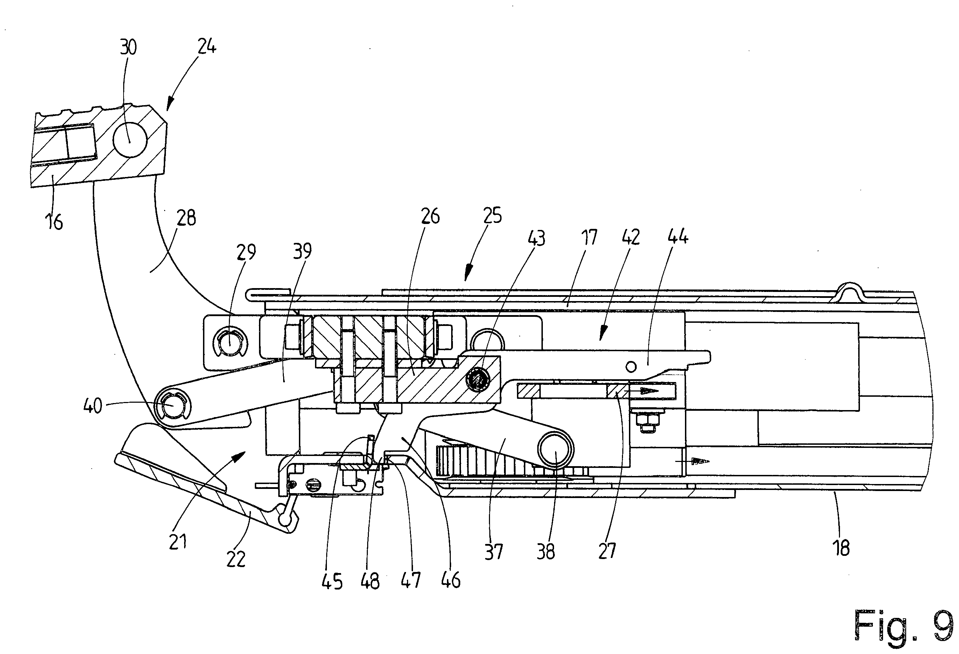

Ein zweiter, zum jeweiligen Aufrichthebel 28 weisender Hebelarm jeder Klinke 42 ist mit einem festen Anschlag 45 des Gehäuses 17 nach dem Ausschieben der Rampe 16 aus dem Gehäuse 17 zur Anlage bringbar. Das führt zu einem Verschwenken der Klinken 42 gegen den Uhrzeigersinn, wodurch die Abstützung des freien Endbereichs 44 des gegenüberliegenden Hebelarms jeder Klinke 42 am Schieber 27 aufgehoben wird und im Anschluss an das Herausfahren der Rampe 16 aus dem Gehäuse 17 das Hochschwenken der Aufrichthebel 28 zur Herbeiführung der Flurkantenanpassung eingeleitet wird. Wenn die Rampe 16 vollständig aus dem Gehäuse 17 herausgefahren und die Flurkantenanpassung erfolgt ist, sich also die Vorrichtung in ihrer Gebrauchsstellung befindet, kann gegebenenfalls der freie Endbereich 44 der jeweiligen Klinke 42 wieder zur Anlage an den Schiebern 27 gelangen. Dabei greifen Nasen 48 an zu den Aufrichthebeln 28 weisenden Endbereichen 46 der Klinken 42 in Ausnehmungen 47 in den Anschlägen 45 des Gehäuses 17, beispielsweise der Bodenwandung 18 desselben, ein (Fig. 9). Dies führt zu einer Arretierung der Aufrichthebel 28 und der dadurch herbeigeführten Flurkantenanpassung der Rampe 16.

Beim Einfahren der Rampe 16 in das Gehäuse 17 wird als Erstes die Flurkantenanapassung durch Herunterschwenken der Aufrichthebel 28 rückgängig gemacht. Dabei werden zunächst die Schlitten 26 von den Klinken 42 in ihrer Endposition zur Flurkantenanpassung festgehalten. Hierbei werden anfänglich nur die Schieber 27 von den Schlitten 26 wegbewegt und dadurch die Aufrichthebel 28 heruntergeschwenkt.

Nach der Rückgängigmachung der Flurkantenanpassung werden die Schlitten 26 von den Schiebern 27 mitgenommen und dabei die Klinken 42 durch Zurückschwenken im Uhrzeigersinn mit ihren Nasen 48 aus den Ausnehmungen 47 im Gehäuse 17 herausgezogen. Gleichzeitig wird die Rampe 17 von den mittels des Schiebers 27 gezogenen Schlitten 26 in das Gehäuse 17 bis zum Erreichen der Nichtgebrauchsstellung eingefahren und kurz vor Erreichen der Nichtgebrauchsstellung die Klinken 42 weiter im Uhrzeigersinn verschwenkt, so dass die Klinken 42 wieder eine Abstützung der Schlitten 26 an den Schiebern 27 herbeiführen (Fig. 4).

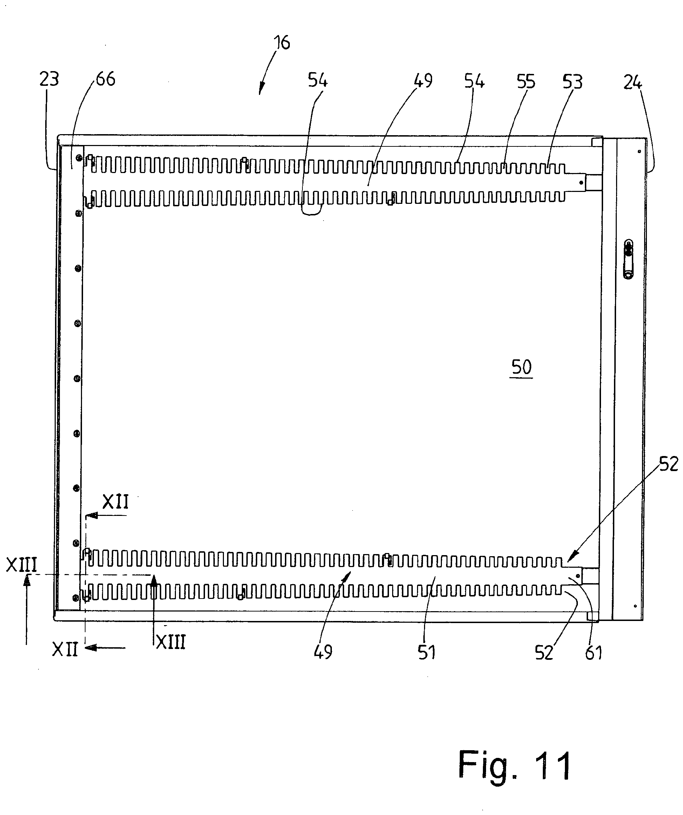

Erfindungsgemäß ist es vorgesehen, unter der Rampe 16 federnde Stützstreifen 49 anzuordnen. Im gezeigten Ausführungsbeispiel (Fig. 11) sind in Ein- und Ausschubrichtung der Rampe 16 verlaufenden, gegenüberliegenden Längsseitenbereichen einer Bodenwand 50 der Rampe 16 zwei gleich ausgebildete parallele Stützstreifen 49 zugeordnet. Die parallel zur Ein- und Ausschubrichtung der Rampe 16 verlaufenden Längsmittelachsen der Stützstreifen 49 verlaufen jeweils mit gleichem Abstand parallel zu den gegenüberliegenden Längsrändern der Rampe 16.

Jeder der gleich ausgebildeten Stützstreifen 49 besteht aus drei in Längsrichtung derselben durchgehenden, zusammenhängenden Teilbereichen, und zwar einem Mittelbereich 51 und zwei gegenüberliegenden Seiten des Mittelbereichs 51 zugeordneten Randbereichen 52. Die Randbereiche 52 sind bevorzugt gleich ausgebildet. Die Randbereiche 52 sind kammerartig ausgebildet, indem sie jeweils eine Reihe beabstandeter Nuten 53 aufweisen. Die Nuten 53 gehen aus vom Längsrand 54 jedes Stützstreifens 49 und enden am Mittelbereich 51. Zwischen benachbarten Nuten 53 wird jeweils eine Zunge 55 gebildet. Alle vorzusehenden Zungen 55 sind einstückig mit dem Mittelbereich 51 verbunden, hängen also praktisch am Mittelbereich 51.

Im gezeigten Ausführungsbeispiel sind die Nuten 53 und Zungen 55 beider Randbereich 52 etwa gleich breit. Es ist auch denkbar, die Nuten 53 und Zungen 55 unterschiedlich breit auszubilden. Die hier gezeigten Stützstreifen 49 verjüngen sich zur fahrzeugseitigen Querkante 24 der Rampe 16 hin. Die Längsränder 54 jedes Stützstreifens 49 verlaufen somit zur fahrzeugseitigen Querkante 24 der Rampe 16 leicht konvergierend. Alternativ oder zusätzlich (wie im gezeigten Ausführungsbeispiel der Fig. 11) kann auch der Mittelbereich 51 in Richtung zur fahrzeugseitigen Querkante 24 der Rampe 16 leicht konvergieren, bevorzugt weniger als die äußeren Längsränder 54 der Stützstreifen 49. Dadurch werden die Nuten 53 und die dazwischen liegenden Zungen 55 zur fahrzeugseitigen Querkante 24 der Rampe 16 hin kürzer. Die Folge ist, dass die Federsteifigkeit der Zungen 55 zur fahrzeugseitigen Querkante 24 der Rampe 16 hin kontinuierlich zunimmt. Alternativ oder zusätzlich kann das auch erreicht werden durch zur fahrzeugseitigen Querkante 24 der Rampe 16 hin zunehmende Breiten der Zungen 55.

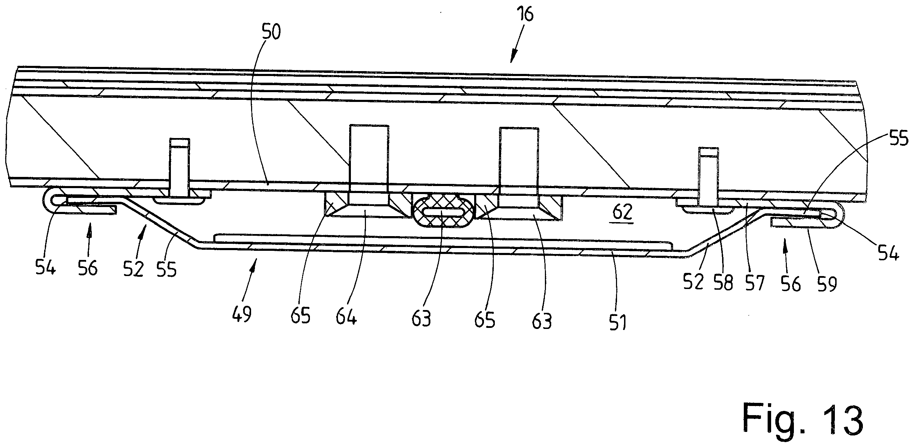

Die Stützstreifen 49 sind im Querschnitt gesehen gleichermaßen profiliert, nämlich trapezartig oder auch kappen- bzw. tellerartig ausgebildet (Fig. 13). Dadurch verläuft der Mittelbereich 51 jedes Stützstreifens 49 mit parallelem Abstand unter der Bodenwandung 50 der Rampe 16. Demgegenüber sind die genuteten Randbereiche 52 gegensinnig zum Mittelbereich 51 abgewinkelt. Im gezeigten Ausführungsbeispiel sind auch die Enden der Zungen 55 gegenüber dem schrägen Abschnitt derselben abgewinkelt, und zwar so, dass sie mit parallelem Abstand zum Mittelbereich 51 jedes Stützstreifens 49 verlaufen und somit auch parallel zur Bodenwandung 50 der Rampe 16.

Die Stützstreifen 49 sind an ihren zur freien Querkante 23 der Rampe 16 weisenden Enden mit der Bodenwandung 50 der Rampe 16 verbunden. Das geschieht im gezeigten Ausführungsbeispiel mittels der parallel zur Bodenwandung 50 verlaufenden abgewinkelten Enden der beiden gegenüberliegenden Zungen 55 am zur Querkante 23 weisenden Ende des jeweiligen Stützstreifens 49, und zwar mit Klammern 56. Die teilweise U-förmig ausgebildeten Klammern 56 sind mit ihren unter der Bodenwandung 50 anliegenden längeren Schenkeln 57 unter der Bodenwandung 50 befestigt, beispielsweise durch Niete 58 oder auch Schrauben. Der parallele, kürzere Schenkel 59 jeder Klammer 56 ist vom längeren Schenkel 57 soweit beabstandet, dass zwischen den Schenkeln 57 und 59 der abgewinkelte Endbereich jeweils einer Zunge 55 eines Stützstreifens 59 Aufnahme findet.

Die Stützstreifen 49 sind außerdem an ihren zur fahrzeugseitigen Querkante 24 der Rampe 16 weisenden Enden mit jeweils einer Niete 60 oder einer Schraube mit der Bodenwandung 50 der Rampe 16 verschraubt. Dies geschieht im gezeigten Ausführungsbeispiel durch eine Lasche 61, die den Mittelbereich 51 des jeweiligen Stützstreifens 49 verlängert. Die Lasche 61 ist genauso doppelt abgewinkelt wie die Zungen 55 an gegenüberliegenden Enden der Stützstreifen 49 (Fig. 13). Durch die so abgewinkelten Laschen 61 werden die zur fahrzeugseitigen Querkante 24 der Rampe 16 weisenden Enden der Mittelbereiche 51 des Stützstreifens 49 genauso von der Bodenwandung 18 der Rampe 16 beabstandet gehalten wie die Mittelbereiche 51 der Stützstreifen 49 im Übrigen.

Durch den von der Bodenwandung 18 der Rampe 16 beabstandeten Mittelbereich 51 jedes Stützstreifens 49 wird unter dem im Querschnitt trapezförmigen Stützstreifen 49 ein Hohlraum 62 zwischen dem jeweiligen Stützstreifen 49 und der Bodenwandung 18 geschaffen. Mittig in diesem Hohlraum 62 ist mindestens ein Sensormittel angeordnet, und zwar vorzugsweise unter der Bodenwandung 50 der Rampe 16 befestigt. Das Sensormittel ist im gezeigten Ausführungsbeispiel als ein in Längsrichtung der Rampe 16 durchgehender Sensorstreifen 63 ausgebildet. Der Sensorstreifen 63 ist so gestaltet, dass er schalterartig einen elektrischen Stromkreis schließt, wenn er zusammengedrückt wird, sodass an irgendeiner Stelle seine obere Deckwandung und seine untere an der Bodenwandung 18 anliegende und befestigte Fußwandung miteinander in Kontakt geraten.

Auf beiden Seiten neben dem Sensorstreifen 37 sind unter der Bodenwandung 50 beispielsweise durch Schrauben 64 oder auch Niete durchgehende, längliche Distanzleisten 65 mit einem vorzugsweise rechteckigen Querschnitt befestigt. Die Distanzleisten 65 weisen eine Höhe gegenüber der Bodenwandung 18 auf, die so bemessen ist, dass die Sensorstreifen 63 nur soweit zusammengedrückt werden können, dass Beschädigungen desselben nicht zu befürchten sind; die Sensorstreifen 63 aber Schaltsignale erzeugen oder einen Stromkreis schließen können.

Mit den Stützstreifen 49 stützt sich die Rampe 16 auf der Bodenwandung 18 des Gehäuses 17 im eingefahrenen Zustand ab. Beim Aus- und Einfahren der Rampe 16 aus dem bzw. in das Gehäuse 17 stützt sich die Rampe 16 nur auf einer die Öffnung 21 des Gehäuses 17 begrenzende freie Querkante der Bodenwandung 18 des Gehäuses 17 ab.

Die Federeigenschaften der Stützstreifen 49 sind so bemessen, dass beide Stützstreifen 49 bei der Abstützung auf der vorderen Querkante der Bodenwandung 18 des Gehäuses 17 bei unbelasteter Rampe 16 nicht soweit einfedern, dass sie mindestens einen Sensorstreifen 63 betätigen, dieser also kein Signal zum automatischen Stoppen des Ein- bzw. Ausfahrvorgangs der Rampe 16 an eine Steuerung des Antriebs der Rampe 16 geben kann. Falls sie doch beim Ein- oder Ausfahren die Rampe 16 auf irgendeine Weise belastet wird, federn die Stützstreifen 49 soweit ein, dass sie mindestens einen Sensorstreifen 63 schalterartig betätigen und dadurch ein elektrisches Signal zum sofortigen Stoppen der weiteren Ein- oder Ausfahrbewegung der Rampe 16 erzeugen.

Weil bei weiter ausgefahrener Rampe 16 von derselben eine größere Stützlast auf die Stützstreifen 49 an der vorderen Querkante der Bodenwandung 18 des Gehäuses 17 ausgeübt wird, nimmt die Federsteifigkeit der Stützstreifen 49 zur fahrzeugseitigen Querkante 24 der Rampe 16 zu, so dass auch bei nahezu ausgefahrener Rampe 16 im unbelasteten Zustand derselben die Stützstreifen 49 nicht soweit einfedern, dass sie wenigstens einen Sensorstreifen 63 betätigen und es dadurch zu einem unbeabsichtigten Stoppen der weiteren Ein- und Ausfahrbewegung der Rampe 16 kommen könnte.

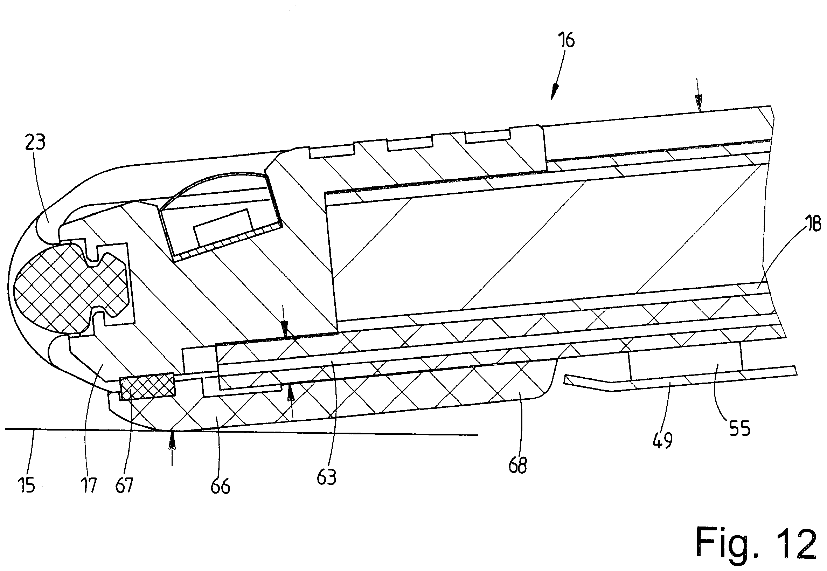

Die Fig. 12 zeigt die ausgefahrene Rampe 16 in der Betriebsstellung und bei erfolgter Flurkantenanpassung, und zwar einen Querschnitt durch den Bereich der vorderen Querkante 23 der Rampe 16. Demnach ist angrenzend an die vordere Querkante 23 unter der Rampe 16 eine parallel zur Querkante 23 verlaufende Schaltleiste 66 vorgesehen. In der Betriebsstellung liegt die vordere Querkante 23 der Rampe 16 mit der Schaltleiste 66 auf dem Bodenbelag 15 auf.

Die Schaltleiste 66 ist in ihrem zur vorderen Querkante 23 weisenden Endbereich unter der Rampe 16 mit einem oder mehreren elastisch zusammendrückbaren Gummipuffern 67 oder sonstigen Federelementen abgestützt. Die Schaltleiste 66 ist so unter der Rampe 16 befestigt, dass bei Belastung der sich in der Gebrauchsstellung befindenden, ausgefahrenen Rampe 16 der oder jeder Gummipuffer 67 einige Millimeter einfedern kann und dadurch die Schaltleiste 66 zur Anlage unter der Unterseite der Rampe 16 kommt. Dabei drückt ein vordere Enden der Sensorstreifen 63 überdeckender hinterer Bereich 68 der Schaltleiste 66 einen zur freien Querkante 23 der Rampe 16 weisenden Endbereich wenigstens eines Sensorstreifens 63 zusammen, wodurch dieser nach Art eines Schalters einen Kontakt schließt. Mittels einer entsprechenden Schaltung wird so der Antrieb, insbesondere eine Stromversorgung des Antriebs zum Einfahren der Rampe 16 aus der in der Fig. 12 gezeigten Gebrauchsstellung, unterbrochen. Auf diese Weise wird sichergestellt, dass bei belasteter Rampe 16, wenn sich beispielsweise noch eine Person auf derselben befindet, die Rampe 16 nicht versehentlich eingefahren werden kann.

**Bezugszeichenliste:**

| | | | |
|---|---|---|---|
| 14 | Flurfläche | 44 | Endbereich |
| 15 | Bodenbelag | 45 | Anschlag |
| 16 | Rampe | 46 | Endbereich |
| 17 | Gehäuse | 47 | Ausnehmung |
| 18 | Bodenwandung | 48 | Nase |
| 19 | Längsseitenwandung | 49 | Stützstreifen |
| 20 | Rückwandung | 50 | Bodenwandung |
| 21 | Öffnung | 51 | Mittelbereich |
| 22 | Klappe | 52 | Randbereich |
| 23 | Querkante | 53 | Nut |
| 24 | fahrzeugseitige Querkante | 54 | Längsrand |
| 25 | Hebeltrieb | 55 | Zunge |
| 26 | Schlitten | 56 | Klammer |
| 27 | Schieber | 57 | Schenkel |
| 28 | Aufrichthebel | 58 | Niete |
| 29 | Achse | 59 | Schenkel |
| 30 | Achse | 60 | Niete |
| 31 | Achse | 61 | Lasche |
| 32 | Kipphebel | 62 | Hohlraum |
| 33 | Ausnehmung | 63 | Sensorstreifen |
| 36 | Gelenkbolzen | 64 | Schraube |
| 37 | Betätigungsarm | 65 | Distanzleiste |
| 38 | Gelenkbolzen | 66 | Schalttaste |
| 39 | Koppelarm | 67 | Gummipuffer |
| 40 | Gelenkbolzen | 68 | hinterer Bereich |
| 41 | Gelenkbolzen | | |
| 42 | Klinke | | |
| 43 | Achse | | |

## Patentansprüche

1. Vorrichtung zum Erleichtern des Ein- und Ausstiegs von insbesondere Rollstuhlfahrern in ein bzw. aus einem Fahrzeug, mit einer in einem Gehäuse (17) unter einer Flurfläche (14) des Fahrzeugs in einer Nichtgebrauchsstellung unterbringbaren Rampe (16), die bei Gebrauch aus dem Gehäuse (17) herausfahrbar ist, wobei eine zum Fahrzeug weisende fahrzeugseitige Querkante (24) der Rampe (16) in einer Gebrauchsstellung auf das Niveau der Flurfläche (14) anhebbar ist, **dadurch gekennzeichnet, dass** unter der Rampe (16) mindestens eine in Ein- und Ausfahrrichtung der Rampe (16) verlaufende, sich unter Belastung durch die Rampe verformende, elastisch federnde Einhausung für wenigstens ein unter der Rampe (16) vorgesehenes Sensormittel angeordnet ist, die oder jede elastisch federnd ausgebildete Einhausung eine in Richtung zur fahrzeugseitigen Querkante (24) der Rampe (16) zunehmende Federsteifigkeit aufweist und die Einhausung das mindestens eine Sensormittel umgibt, indem die Einhausung im Querschnitt trapez- oder kuppelartig ausgebildet ist zur Bildung eines sich zwischen einer Innenseite der Einhausung und einem von derselben abgedeckten und beabstandeten Bereich der Rampe (16) befindenden Aufnahme- oder Hohlraums für das Sensormittel.

2. Vorrichtung nach Anspruch 1, **dadurch gekennzeichnet, dass** die oder jede Einhausung das Sensormittel mindestens teilweise umgibt, vorzugsweise die jeweilige Einhausung im Querschnitt kappenartig und/oder trapezartig ausgebildet ist zur Bildung eines Hohlraums (62) zwischen der Innenseite der Einhausung und dem von dieser abgedeckten Bereich der Unterseite der Rampe (16), in dem sich das mindestens eine Sensormittel befindet.

3. Vorrichtung nach Anspruch 1 oder 2, **dadurch gekennzeichnet, dass** die Einhausung und/oder die Sensormittel streifenartig ausgebildet sind.

4. Vorrichtung nach einem oder mehreren der Ansprüche 1 bis 3, **dadurch gekennzeichnet, dass** gegenüberliegende Randbereiche (52) bzw. Randstreifen der kappenartig bzw, trapezartig profilierten, streifenartigen Einhausung kammartig ausgebildet sind, vorzugsweise durch eine in jedem Randbereich (52) bzw. Randstreifen angeordnete Reihe beabstandeter Nuten (53), die von äußeren Längsrändern (54) der Einhausung ausgehen.

5. Vorrichtung nach einem oder mehreren der Ansprüche 1 bis 4, **dadurch gekennzeichnet, dass** die Tiefe der Nuten (53) in den Randbereichen (52) der oder jeder Einhausung zur fahrzeugseitigen Querkante (24) der Rampe (16) kontinuierlich abnimmt und/oder die Breite der Einhausung zur fahrzeugseitigen Querkante (24) kontinuierlich abnimmt.

6. Vorrichtung nach einem oder mehreren der Ansprüche 1 bis 5, **dadurch gekennzeichnet, dass** das von der Einhausung umgebende Sensormittel unter der Rampe (16) als mindestens ein länglicher Sensorstreifen (63), vorzugsweise ein drucksensitiver, elektrischer Sensorstreifen (63), ausgebildet ist.

## Claims

1. Device for facilitating entry and exit to and from a vehicle, especially for wheelchair users, with a ramp (16) which can be accommodated in a non-use position in a housing (17) under a floor surface (14) of the vehicle and which can be extended out of the housing (17) for use, wherein, in a use position, a vehicle-facing, vehicle-side transverse edge (24) of the ramp (16) can be raised to the level of the floor surface (14), **characterized in that** an elastically resilient enclosure for at least one sensor means provided under the ramp (16) is arranged under the ramp (16), said enclosure running in the entry and exit direction of the ramp (16) and being deformed under loading by the ramp, the or each enclosure of elastically resilient design has spring rigidity increasing in the direction of the vehicle-side transverse edge (24) of the ramp (16), and the enclosure surroundings the at least one sensor means by the enclosure being designed in the manner of a trapezoid or dome in cross section to form the receiving space or cavity for the sensor means, said receiving space or cavity being located between an inner side of the enclosure and a region of the ramp (16) that is covered by and spaced apart from said enclosure.

2. Device according to Claim 1, **characterized in that** the or each enclosure at least partially surrounds the sensor means, the respective enclosure is preferably designed in the manner of a cap and/or in the manner of a trapezoid in cross section in order to form a cavity (62) between the inner side of the enclosure and that region of the lower side of the ramp (16) which is covered by said enclosure and in which the at least one sensor means is located.

3. Device according to Claim 1 or 2, **characterized in that** the enclosure and/or the sensor means is or are designed in the manner of (a) strip(s).

4. Device according to one or more of Claims 1 to 3, **characterized in that** opposite edge regions (52) or edge strips of the strip-like enclosure profiled in the manner of a cap or in the manner of a trapezoid are designed in the manner of cones, preferably by means of a series of spaced-apart grooves (53) arranged in each edge region (52) or edge strip, said grooves emerging from outer longitudinal edges (54) of the enclosure.

5. Device according to one or more of Claims 1 to 4, **characterized in that** the depth of the grooves (53) in the edge regions (52) of the or each enclosure decreases continuously to the vehicle-side transverse edge (24) of the ramp (16) and/or the width of the enclosure decreases continuously to the vehicle-side transverse edge (24).

6. Device according to one or more of Claims 1 to 5, **characterized in that** the sensor means, which is surrounded by the enclosure, under the ramp (16) is designed as at least one elongate sensor strip (63), preferably a pressure-sensitive electric sensor strip (63).

## Revendications

1. Dispositif pour faciliter la montée et la descente dans ou depuis un véhicule, notamment par des utilisateurs de fauteuil roulant, comprenant une rampe (16) qui peut être introduite dans une position de non-utilisation dans un boîtier (17) sous une surface de plancher (14) du véhicule, laquelle peut être sortie hors du boîtier (17) lors de l'utilisation, un bord transversal (24) côté véhicule de la rampe (16), lequel est orienté vers le véhicule, pouvant être relevé au niveau de la surface de plancher (14) dans une position d'utilisation, **caractérisé en ce que** sous la rampe (16) est disposé au moins un logement à flexibilité élastique pour au moins un moyen de détection présent sous la rampe (16), ledit logement s'étendant dans le sens de l'entrée et de la sortie de la rampe (16) et se déformant lorsqu'il est sollicité par la rampe, le ou chaque logement de configuration flexible élastique possédant une rigidité de ressort qui augmente dans la direction vers le bord transversal (24) côté véhicule de la rampe (16) et le logement entourant l'au moins un moyen de détection par le fait que le logement présente une section transversale de configuration trapézoïdale ou en forme de coupole destinée à former un espace d'accueil ou creux pour le moyen de détection qui se trouve entre un côté intérieur du logement et une zone de la rampe (16) recouverte par celui-ci et espacée de celui-ci.

2. Dispositif selon la revendication 1, **caractérisé en ce que** le ou chaque logement entoure au moins partiellement le moyen de détection, le logement respectif étant de préférence configuré avec une section transversale en forme de chapeau et/ou de forme trapézoïdale en vue de former un espace creux (62) entre le côté intérieur du logement et la zone du côté inférieur de la rampe (16) recouverte par celui-ci, dans lequel se trouve l'au moins un moyen de détection.

3. Dispositif selon la revendication 1 ou 2, **caractérisé en ce que** le logement et/ou le moyen de détection sont configurés en forme de bande.

4. Dispositif selon une ou plusieurs des revendications 1 à 3, **caractérisé en ce que** les zones de bordure (52) ou les bandes de bordure opposées du logement en forme de bandes profilé en forme de chapeau ou de forme trapézoïdale sont réalisées à la façon d'un peigne, de préférence par une rangée de rainures (53) espacées, disposée dans chaque zone de bordure (52) ou bande de bordure, lesquelles émanent des bords longitudinaux extérieurs (54) du logement.

5. Dispositif selon une ou plusieurs des revendications 1 à 4, **caractérisé en ce que** la profondeur des rainures (53) dans les zones de bordure (52) du ou de chaque logement diminue continuellement vers le bord transversal (24) côté véhicule de la rampe (16) et/ou la largeur du logement diminue continuellement vers le bord transversal (24) côté véhicule.

6. Dispositif selon une ou plusieurs des revendications 1 à 5, **caractérisé en ce que** le moyen de détection entouré par le logement sous la rampe (16) est réalisé sous la forme d'au moins une bande de détection (63) allongée, de préférence une bande de détection (63) électrique sensible à la pression.
